# EUROPÄISCHE PATENTSCHRIFT

(11) **EP 4 341 129 B1**
(45) Veröffentlichungstag und Bekanntmachung des Hinweises auf die Patenterteilung: **28.01.2026**
(21) Anmeldenummer: 22723019.0
(22) Anmeldetag: 03.05.2022
(51) Int. Cl.: B60P 7/13

(54) **CONTAINERVERRIEGELUNGSVORRICHTUNG SOWIE CONTAINERVERRIEGELUNGSVERFAHREN**
CONTAINER LOCKING DEVICE AND CONTAINER LOCKING METHOD
DISPOSITIF DE VERROUILLAGE DE CONTENEUR ET PROCÉDÉ DE VERROUILLAGE DE CONTENEUR

(30) Priorität: 18.05.2021 DE 102021112894
(43) Veröffentlichungstag der Anmeldung: 27.03.2024
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2022/100337
(87) Internationale Veröffentlichungsnummer: WO 2022/242792

(56) Entgegenhaltungen:
- WO-A1-00/51842
- DD-A5- 296 461
- DE-A1- 10 202 190

## Beschreibung

Die Erfindung betrifft eine Containerverriegelungsvorrichtung auf einem Fahrzeug, zur Verriegelung eines auf einer Ladefläche des Fahrzeugs zu transportierenden Containers mit einem Eckbeschlag, aufweisend ein Verriegelungsgehäuse, einen Verriegelungsbolzen und einen Antrieb, wobei der Verriegelungsbolzen einen Schaft und einen Verriegelungskopf hat, der in entriegeltem Zustand über eine Öffnung des Eckbeschlags des Containers einführbar und in verriegeltem Zustand den Container über die Öffnung des Eckbeschlages hintergreifende Vorsprünge sichert, der Verriegelungsbolzen mit seinem Schaft in dem Verriegelungsgehäuse sowohl axial verschiebbar als auch um seine Achse drehbar gelagert ist, der Verriegelungsbolzen an seinem Schaft mit einer zu seinem Umfang tangentialen, ansteigenden Aussparung versehen ist, ein Keilschlitten im Verriegelungsgehäuse lateral, also senkrecht zur Achse des Verriegelungsbolzens , hin- und herbewegbar gelagert und von dem Antrieb antreibbar ist, und der Keilschlitten eine Auflaufschräge aufweist, die mit der Aussparung des Verriegelungsbolzens während der Lateralbewegung des Keilschlittens in Eingriff steht und dem Verriegelungsbolzen eine axiale Bewegung erteilt. Ferner betrifft die Erfindung ein Containerverriegelungsverfahren, das mit o. g. Vorrichtung ausführbar ist.

Eine derartige Verriegelungsvorrichtung für Container auf einem Fahrzeug ist aus der EP 1 075 400 B1 bzw. der WO 00/51842 A1 bekannt. Dabei wird als Antrieb für die Linearbewegung ein Membranspeicherantrieb vorgeschlagen, der nur bei Druckluftbeaufschlagung in seiner Arbeitslage gehalten wird und bei Druckabfall in seine entlastete Lage mittels einer Feder rückgestellt wird. Somit ist es bei dieser Verriegelungsvorrichtung erforderlich, vor dem Beladen des Fahrzeugs zunächst den Antrieb durch Druckluftbeaufschlagung zu aktivieren, um die Verriegelungsvorrichtung in ihren entriegelten Zustand zu bringen, um dann den

Container mit seinem Eckbeschlag über den entriegelten Verriegelungskopf aufladen zu können. Bei Druckentlastung wird dann der Membranspeicher Feder belastet in seine Grundstellung rückgestellt, womit sich der Verriegelungsbolzen dreht und senkt. Dabei wird die Drehung des Verriegelungsbolzens mittels eines Zahnkranzes, der in eine Zahnstange eingreift, erreicht. Dieser verriegelte Zustand wird allein durch die Federbelastung des Membranspeichers in seiner Grundstellung gehalten, womit die Verriegelung bei starken äußeren Kräften nachgeben könnte. Ferner ist der Drehantrieb für den Verriegelungsbolzen mit Zahnkranz und Zahnstange technisch aufwendig und im rauen Alltagsbetrieb störanfällig.

Die DE 102 02 190 A1 beschreibt eine zur EP 1 075 400 B1 ähnliche Container-Verriegelungsvorrichtung, bei der jedoch der Verriegelungsbolzen an seinem Schaft keine zu seinem Umfang tangentiale, ansteigende Aussparung aufweist, sondern zwei lateral übereinander und versetzt angeordnete Nockenpaare. Ferner kann die Vorrichtung eine Zusatzsicherung aufweisen, die in allen Stellungen des Verriegelungsbolzens (Drehzapfen) ein vertikales Herausziehen des Drehzapfes in Richtung des Containers verhindert. Nachteilig ist, dass die Zusatzsicherung manuell zu setzen und zu entsichern ist.

Aus der DD 296461 A5 ist ein in Kuppelstück zur lösbaren Verbindung von Eckbeschlägen benachbarter Container, insbesondere übereinander gestapelter Container an Bord von Schiffen bekannt. Zur Verringerung des manuellen Aufwandes beim Zusammenkuppeln von Containern und des in mehrfacher Hinsicht hohen Aufwandes für die Betätigungsautomatik wird ein Kuppelstück mit einem einteiligen Gehäuse vorgestellt, bei dem der Verriegelungsbolzen durch einen längsverschieblich im Gehäuse gelagerten Betätigungsschieber in unterschiedliche Stellungen verdrehbar ist. Weiterhin ist das Gehäuse einteilig ausgebildet und mit einer Durchgangsöffnung versehen, durch die ein entsprechend ausgebildeter Querriegel des Verriegelungsbolzens in einer Montagestellung hindurchschiebbar ist.

Ferner ist aus der DE 10 2006 002 654 A1 eine Vorrichtung zur Betätigung einer Verriegelung eines Verriegelungskopfes mit einem Eckbeschlag eines Containers bekannt, die eine pneumatische Kolbenzylinderanordnung aufweist, mit der eine ausfahrbare und absenkbare Klaue des Verriegelungskopfes von einer eingefahrenen Lage in einer ausgefahrenen Lage und von dort in die Riegelstellung und wieder zurück zu bringen ist. Auch hier ist eine ergänzende Sperre nicht vorgesehen, so dass die Vorrichtung allein durch den pneumatischen Antrieb in Riegelstellung gehalten wird.

Aus der DE 10 2007 007 067 A1 ist eine Vorrichtung für Verriegelung eines Containers auf einem Fahrzeug bekannt, bei der durch die Auflast eines aufgesetzten Containers die Gewichtskraft an einen Antriebsmechanismus für den Verriegelungsteil übersetzt wird, womit eine automatisierte Verriegelung beim Aufsetzen des Containers erreicht wird. Zum Abnehmen des Containers ist allerdings eine manuelle Verstellung an einem Schwenkhebel erforderlich, um die Verriegelung zu entriegeln. Eine Zusatzverriegelung mit einer gesonderten Sperreinrichtung ist hier nicht verwirklicht.

Die DE 201 19 415 U1 beschreibt eine Vorrichtung zum selektiven Hin- und Herbewegen von Antriebsteilen eines Mechanismus zum Anheben, Absenken und Drehen eines Verriegelungsbolzens zur Verriegelung mit einem Beschlag eines Containers vermittels einer Druckmittel betätigten Kolbenzylinderanordnung, mit dem ein Containerverriegelungsmechanismus von einer abgesenkten Lage, bei der der Verriegelungskopf nicht über die Transportebene des aufnehmenden Fahrzeugs vorsteht, in eine angehobene Stellung verstellbar ist, mit dem der Verriegelungsmechanismus zur Aufnahme eines Containers in erhöhter Position vorbereitet ist und dann nach Aufladen des Containers verriegelt werden kann.

Die DE 197 20 238 A1 beschreibt eine Containerverriegelungsvorrichtung mit einem drehangetriebenen Verriegelungskopf, bei dem gleichzeitig ein horizontal zu bewegender Steckzapfen für sogenannte Gooseneck-Containerchassis über ein Zahnradsegment mit der Drehbewegung lateral ausgefahren wird.

Aufgabe der Erfindung ist es daher, die eingangs beschriebene, bekannte Containerverriegelungsvorrichtung technisch zu vereinfachen und sicherer zu gestalten.

Gelöst wird diese Aufgabe mit einer Containerverriegelungsvorrichtung gemäß Anspruch 1 und einem Containerverriegelungsverfahren gemäß Anspruch 4.

Dadurch, dass der Verriegelungsbolzen eine Anlagekante an seinem Schaft aufweist, die mit einem Schubvorsprung des Keilschlittens zusammenwirkt, um dem Verriegelungsbolzen bei der Lateralbewegung des Keilschlittens eine Drehbewegung um 90° zu erteilen, und eine Sperreinrichtung am Verriegelungsgehäuse angeordnet ist, die eine mit Federkraft beaufschlagte Sperre aufweist, die in den lateralen Bewegungsweg des Keilschlittens eingreifbar ausgebildet ist, wird die Drehbewegung für den Verriegelungsbolzen um seine Achse beim Verschieben des Keilschlittens technisch einfach durch die Anlagekante an seinem Schaft, die mit dem Schubvorsprung des Keilschlittens zusammenwirkt, realisiert. Durch die Sperreinrichtung wird eine formschlüssige Sperre aktiviert, die ein unbeabsichtigtes Wiederöffnen der Verriegelungsvorrichtung durch die Sperre im Bewegungsweg des Keilschlittens verhindert. Somit kann die Verriegelung des Containers beispielsweise auch bei Unterbrechung der Antriebskraft für den Antrieb nicht selbsttätig öffnen. Da der Antrieb einen doppeltwirkenden Pneumatikzylinder mit einer lateral bewegbaren Kolbenstange aufweist, wobei die Kolbenstange mit dem Keilschlitten so wirkverbunden ist, dass beim ersten Teil der Hubbewegung des Antriebes ein Leerhub und beim zweiten Teil der Hubbewegung die Lateralbewegung des Keilschlittens erfolgen, wird der Keilschlitten erst im zweiten Teil der Hubbewegung betätigt. Dadurch, dass die Sperreinrichtung einen Lösemechanismus für die Sperre aufweist, der beim Leerhub die Sperre löst, wird es ermöglicht, dass während des Leerhubes, also im ersten Teil der Hubbewegung der Kolbenstange die Sperreinrichtung gelöst wird, damit die Verriegelungsvorrichtung vom verriegelten Zustand in den entriegelten Zustand geöffnet werden kann.

Verfahrensgemäß wird die Aufgabe dadurch gelöst, dass bei Erreichen des verriegelten Zustands eine mit Federkraft beaufschlagte Sperre in den lateralen Bewegungsweg des Keilschlittens eingreift und eine Rückstellung des Keilschlittens verhindert wird. Dabei zeichnet sich das Containerverriegelungsverfahren dadurch aus, dass bei einem ersten Teil der Hubbewegung des Antriebes ein Leerhub ausgeführt und bei einem zweiten Teil der Hubbewegung der Keilschlitten mitbewegt wird, wobei beim Entriegeln eines Containers vom verriegelten Zustand in den entriegelten Zustand während des ersten Teils der Hubbewegung im Leerhub die Sperre gelöst wird und dann während des zweiten Teils der Hubbewegung der Keilschlitten rückbewegt wird, womit der Verriegelungsbolzen zunächst angehoben und dann in den entriegelten Zustand rückgedreht wird.

Für den Fall, dass keine ausreichende Druckluftresource und/oder ein Fehler in der Druckluftversorgung bzw. dem Pneumatikzylinder vorliegt, ist eine Notentriegelung vorgesehen, mit der die formschlüssige Sperre der Sperreinrichtung entriegelbar ist.

In weiterer Ausbildung weist die Notentriegelung zwei mit Außengewinde ausgestattete Schubelemente auf, bei dem das erste Schubelement in eine erste Gewindebohrung in der Sperreinrichtung und das zweite Schubelement in eine zweite Gewindebohrung im Verriegelungsgehäuse einschraubbar ist, wobei das erste Schubelement die Sperre freigibt und das zweite Schubelement den Keilschlitten zur Öffnung der Verriegelung verschiebt. Somit kann mit dem ersten Schubelement die Sperreinrichtung gelöst und mit dem zweiten Schubelement die Verriegelungsvorrichtung vom verriegelten Zustand in den entriegelten Zustand verstellt werden, ohne dass eine Kraftbetätigung über den Pneumatikzylinder erforderlich ist (Notentriegelung). Entsprechend kann ein Container auch bei Ausfall der Pneumatik durch manuelles Betätigen der Notentriegelung entladen werden.

Nachfolgend wird ein Ausführungsbeispiel der Erfindung anhand der beiliegenden Zeichnungen detailliert beschrieben.

Darin zeigt:
- Fig. 1: eine räumliche Ansicht einer Verriegelungsvorrichtung,
- Fig. 2 a bis e: eine Aufsicht auf sowie entsprechend gekennzeichnete Querschnitte durch eine Verriegelungsvorrichtung gemäß Fig. 1 im entriegelten Zustand,
- Fig. 3 a bis d: die in Figur 1 dargestellte Vorrichtung bei Betätigung und Beginn der Verstellung zum verriegelten Zustand,
- Fig. 4 a bis d: die entsprechende Ansicht und Querschnitte im Zustand während der Verstellung der Verriegelungsvorrichtung in den verriegelten Zustand,
- Fig. 5 a bis d: die entsprechende Ansicht und Querschnitte bei Erreichen des verriegelten Zustandes,
- Fig. 6 a bis d: die Ansicht und zugeordnete Querschnitte beim Beginn der Entriegelung der Verriegelungsvorrichtung (Leerhub),
- Fig. 7 a bis e: die Ansicht sowie zugeordnete Querschnitte und Ansicht von unten beim Erreichen der angehobenen Stellung des Verriegelungsbolzens,
- Fig. 8 a bis e: Ansichten analog zu Figur 7 sowie entsprechend zugeordnete Querschnitte der Verriegelungsvorrichtung beim Rückdrehen des Verriegelungsbolzens in Richtung seines entriegelten Zustandes.

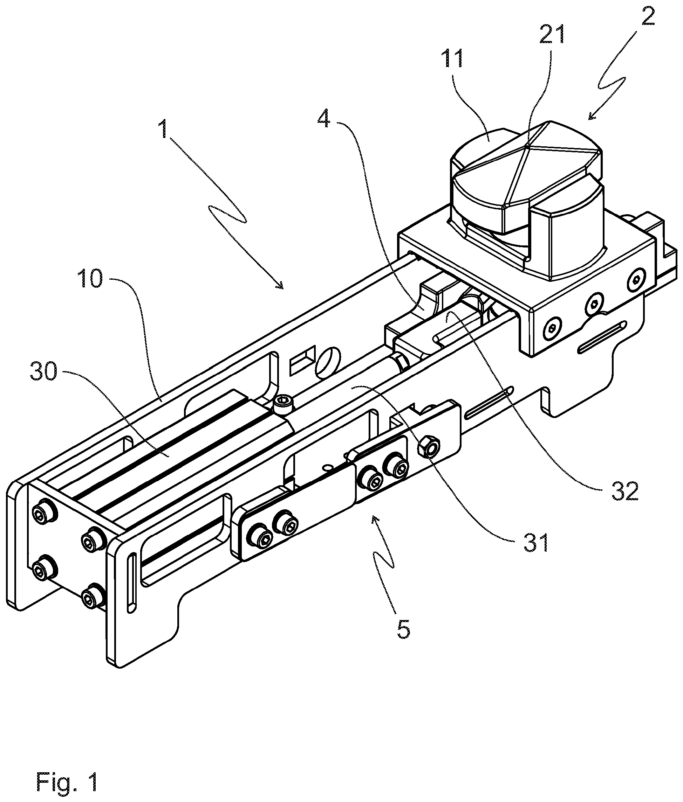

In Fig. 1 ist in räumlicher Ansicht eine Ausführungsform der Containerverriegelungsvorrichtung dargestellt, die an einer Ladefläche eines Fahrzeugs vorgesehen ist, auf dem ein zu transportierender Container abzusetzen ist. Die Verriegelungsvorrichtung weist ein Verriegelungsgehäuse 1 auf, das einen langgestreckten Antriebskasten 10 sowie ein an einem Ende darauf aufbauendes Führungsbauteil 11 mit Lastauflagefläche 12 hat. Das Führungsbauteil 11 überragt die Ladefläche. Dabei passt das nach oben vorstehende Führungsbauteil 11 in einen Eckbeschlag des Containers, womit der Container verrutschungssicher auf der Ladefläche, insbesondere der Lastauflagefläche 12, aufliegt.

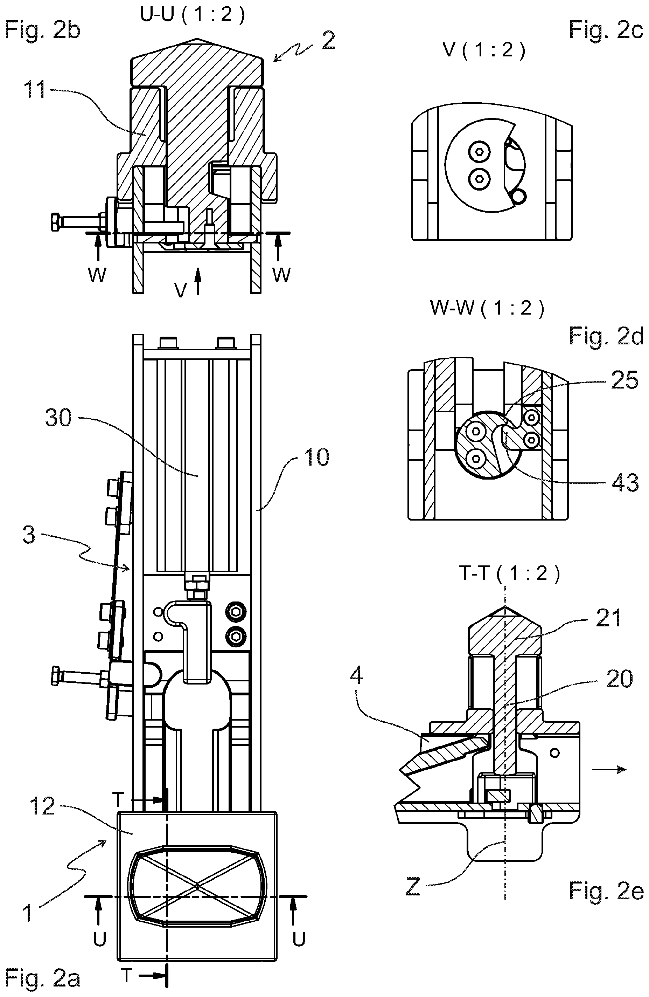

Zur Verriegelung des aufgeladenen Containers ist ein Verriegelungsbolzen 2 vorgesehen, der in einer zentralen und vertikalen Achse Z (siehe Fig. 2e) in dem Führungsbauteil 11 axial verschiebbar und drehbar gelagert ist. Der Verriegelungsbolzen 2 weist einen zylindrischen Schaft 20 auf, der im Verriegelungsgehäuse 1 axial verschiebbar und drehbar gelagert und gehaltert ist. Ferner weist der Verriegelungsbolzen 2 am oberen Ende des Schaftes 20 einen Verriegelungskopf 21 auf, der eine pilzartige, aber elliptische Kontur aufweist und in einem entriegeltem Zustand deckungsgleich auf dem Führungsbauteil 11 aufliegt und in einen verriegelten Zustand verstellbar ist, bei dem der Verriegelungskopf 21 um 90 ° verdreht und abgesenkt ist, sodass die nun vom elliptischen Verriegelungskopf 21 über das Führungsbauteil 11 vorstehenden Vorsprünge den Eckbeschlag des aufgeladenen Containers hintergreifen. In Fig. 1 ist die Containerverriegelungsvorrichtung im verriegelten Zustand dargestellt.

Die genaue Arbeitsweise und die dafür erforderlichen Bauteile der Containerverriegelungsvorrichtung sind in den Fig. 2 bis 7 in jeweils einer Aufsicht auf die Containerverriegelungsvorrichtung (jeweils zu der Teilfigur a) und mehreren Querschnitten und ggf. einer Unteransicht (in den weiteren Teilfiguren b, c, d und ggf. e) wiedergegeben.

In Fig. 2 ist die Containerverriegelungsvorrichtung in ihrem entriegelten Zustand, in dem ein Container entladen bzw. aufgeladen werden kann, dargestellt. Dies ist daran erkennbar, dass der Verriegelungsbolzen 2 mit seinem Schaft 20 in erhöhter Position, also axial nach oben verschoben ist und der zum Verriegelungsbolzen 2 gehörende Verriegelungskopf 21 auf dem Führungsbauteil 11 aufliegt, wie insbesondere aus Fig. 2a und 2b zu entnehmen ist. Entsprechend kann ein Container mit seinem Eckbeschlag und seinem darin ausgebildeten Langloch über den Verriegelungskopf 21 und das Führungsbauteil 11 auf die Ladefläche und insbesondere auf die Lastauflagefläche 12 aufgeladen werden bzw. von der aufgeladenen Position angehoben werden, da der Verriegelungskopf 21 mit dem Führungsbauteil 11 fluchtet (siehe Aufsicht Fig. 2a).

Ferner ist in Fig. 2a in Aufsicht der Antrieb 3 in Form eines doppelt wirkenden Pneumatikzylinders 30 zu sehen, der im langgestreckten Antriebskasten 10 des Verriegelungsgehäuses 1 angeordnet ist. Der doppelt wirkende Pneumatikzylinder 30 hat eine Kolbenstange 31, die über eine Antriebsklaue 32 auf einen im langgestreckten Antriebskasten 10 hin- und herbewegbaren Keilschlitten 4 zusammenwirkt.

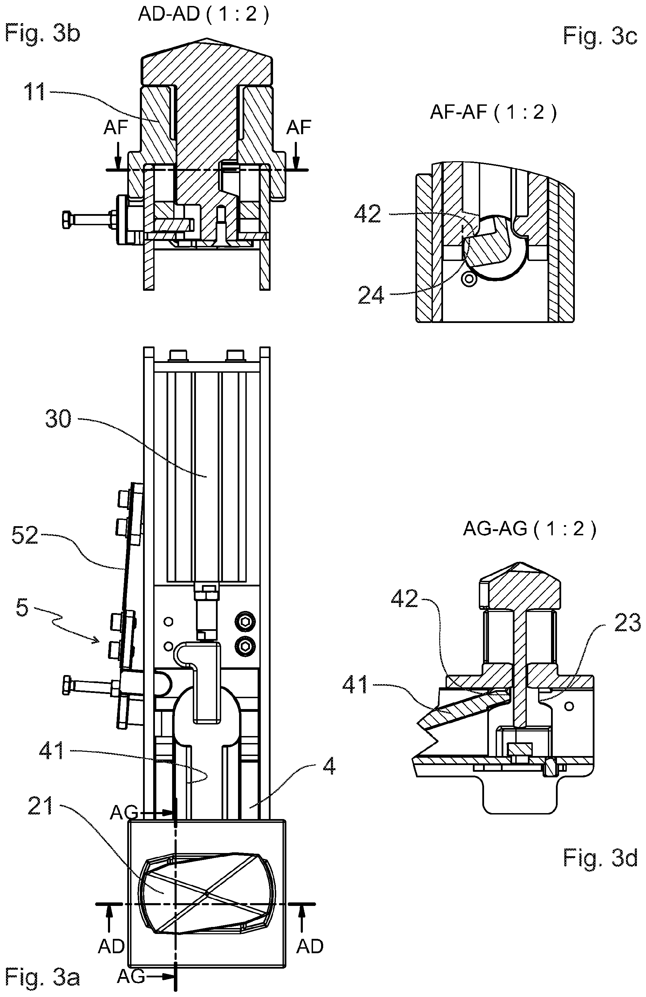

Der Keilschlitten 4 weist eine Auflaufschräge 41 auf, die in Fig. 2a in der Aufsicht und in Fig. 2e angeschnitten dargestellt ist. Die Auflaufschräge 41 weist an ihrem oberen Ende einen Schubvorsprung 42 auf, der mit einer Anlagekante 24 am Schaft 20 des Verriegelungsbolzens 2 derart zusammenwirkt, dass bei Betätigung des Pneumatikzylinders 30 und Bewegung des Keilschlittens 4 in Zeichenebene der Fig. 2e von links nach rechts der Schubvorsprung 42 mit der Anlagekante 24 in Berührung gelangt und bei weiterer Bewegung des Keilschlittens 4 in lateraler Richtung gemäß Fig. 3d nach rechts den Verriegelungsbolzen 2 um seine Achse Z verdreht. In Fig. 3 ist diese Situation in einer Aufsicht (Fig. 3a) und drei Querschnitten (Fig. 3b bis d) dargestellt.

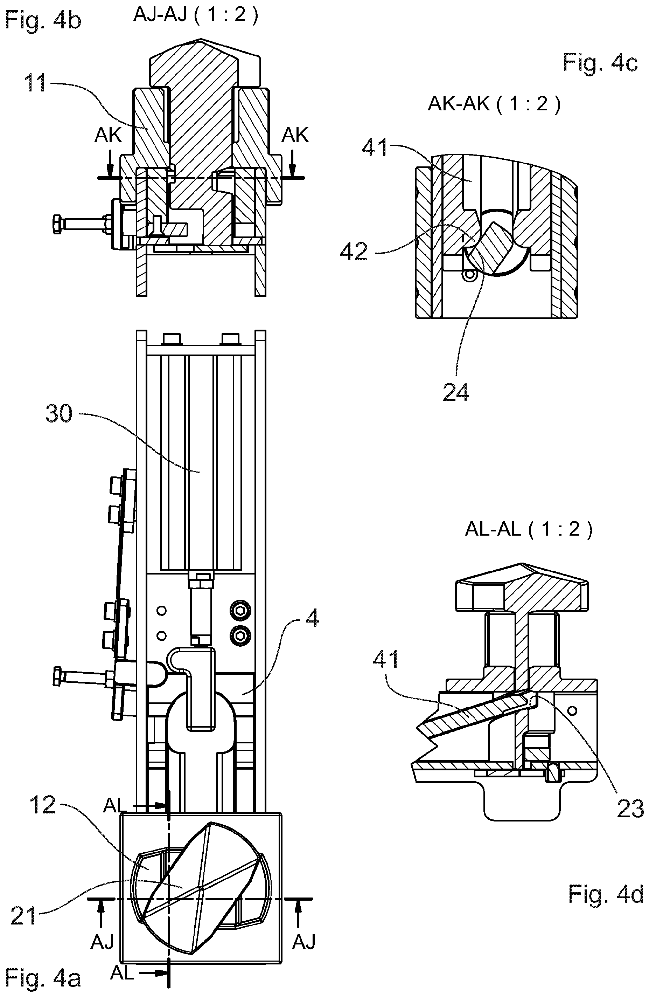

Bei weiterer lateraler Verschiebung des Keilschlittens 4 in der Zeichenebene der Fig. 2e, 3d, 4d und 5d nach rechts wird der Verriegelungsbolzen 2 an seiner am Umfang des Schaftes 20 eingebrachten Aussparung unter Anlage des Schubvorsprunges 42 an der Anlagekante 24 weiter um Achse Z gedreht, wie auch aus der Aufsicht Fig. 4a ersichtlich ist. Diese Situation ist auch in Fig. 3c und Fig. 4c erkennbar, wobei im hier dargestellten Ausführungsbeispiel am Schaft 20 beidseitig tangential schräg angeordnete Aussparungen 23 vorgesehen sind, da der Keilschlitten 4 entsprechend zwei vorstehende Auflaufschrägen 41 aufweist, die beidseitig mit den Aussparungen 23 am Schaft 20 des Verriegelungsbolzens 2 in Eingriff stehen.

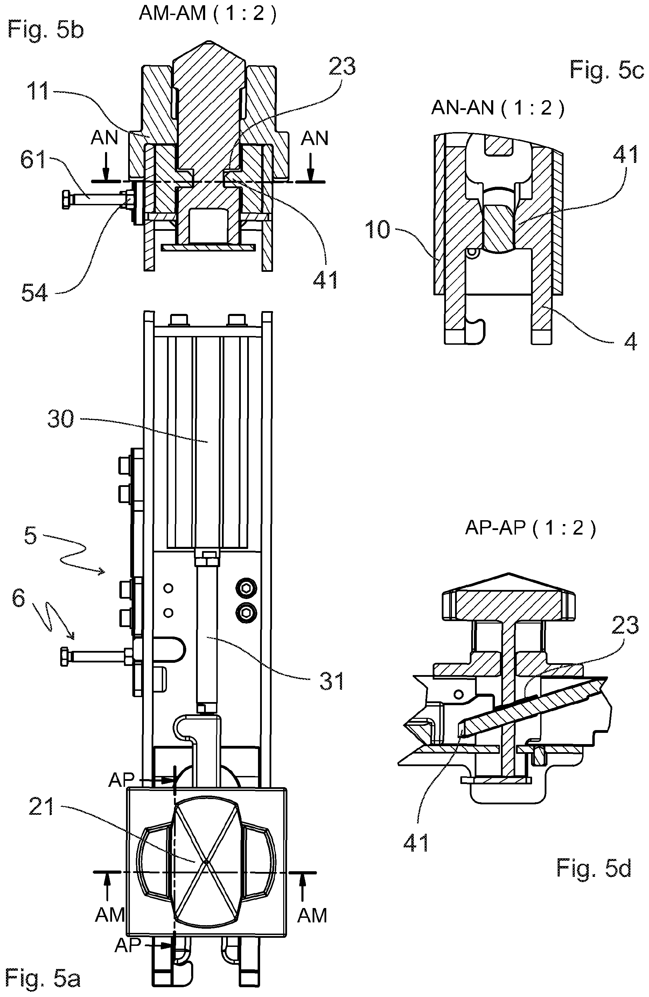

Bei der weiteren Bewegung des Keilschlittens 4 in Fig. 4d in Zeichenebene nach rechts bzw. in Fig. 4a in Zeichenebene nach unten unter Kraftbeaufschlagung vom Pneumatikzylinder 30 wird dann der in Fig. 5 dargestellte verriegelte Zustand erreicht, bei dem der Verriegelungsbolzen 2 vollständig um 90 ° verdreht ist (Fig. 5a) und bereits durch weiteren lateralen Vortrieb des Keilschlittens 4 mit seinem Verriegelungskopf 21 zwischen die beiden vorstehenden Teile des Führungsbauteils 11 abgesunken ist (Fig. 5b). Dabei ist der Eingriff der beiden Auflaufschrägen 41 in den beiden Aussparungen 23 am Schaft 20 des Verriegelungsbolzens 2 besonders gut in Fig. 5b und 5c ersichtlich.

Ferner wird auf eine Sperreinrichtung 5 hingewiesen, die außenseitig am langgestreckten Antriebskasten 10 des Verriegelungsgehäuses 1 angeordnet ist und eine Sperre 51 aufweist, die über eine Blattfeder 52 Kraft beaufschlagt in eine Bohrung des langgestreckten Antriebskasten 10 so eingreift, dass sie bei Erreichen der Endstellung im verriegelten Zustand (Fig. 5) in den Laufweg des Keilschlittens 4 eindringt und dort eine formschlüssige Sperre gegen ein unerwünschtes Lösen der Verriegelung bildet.

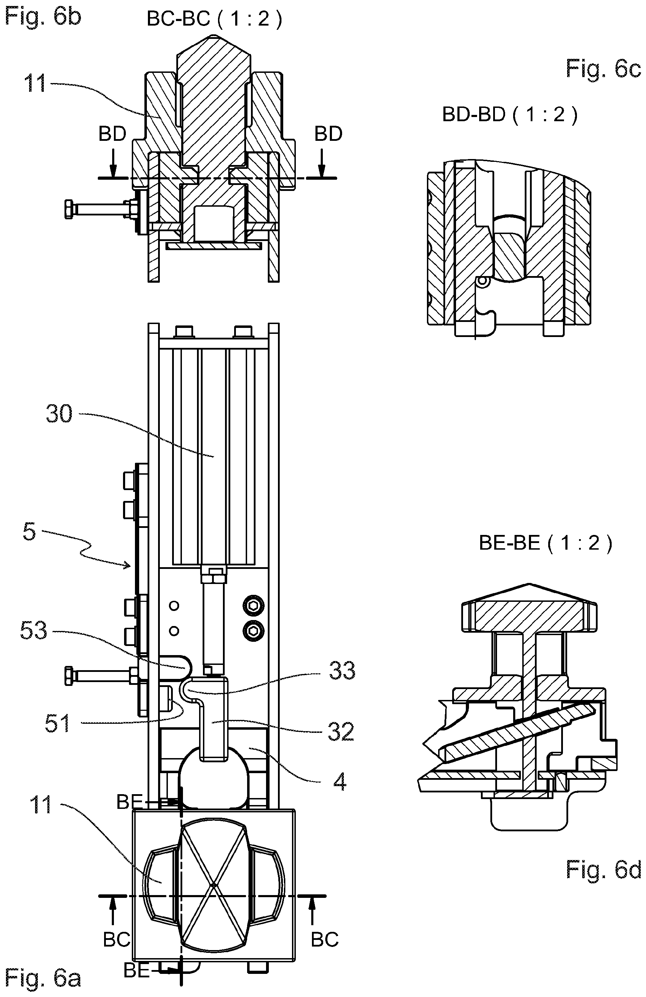

Zum Lösen der Containerverriegelung vom verriegelten Zustand zurück in den entriegelten Zustand wird ausgehend von Fig. 5 (verriegelter Zustand) der doppelt wirkende Pneumatikzylinder 30 zum Einziehen der Kolbenstange 31 aktiviert, womit zunächst ein kurzer Leerhub der Kolbenstange 31 erfolgt, bei dem die Antriebsklaue 32 von ihrer Schubposition in die Zugposition verstellt wird und mit einem Auslösevorsprung 33 an der Antriebsklaue 32 mit einem Verdrängungsbauteil 53 der Sperreinrichtung 5 in Berührung gelangt. Bei der bereits erfolgenden ersten Bewegung des Keilschlittens 4, wie aus dem Vergleich der Fig. 5a mit 6a zu entnehmen ist, wird der Verriegelungsbolzen 2 über die Auflaufschrägen 41, die in den Aussparungen 23 des Schaftes 20 geführt sind, bereits leicht angehoben (siehe Fig. 6b, 6c und 6d).

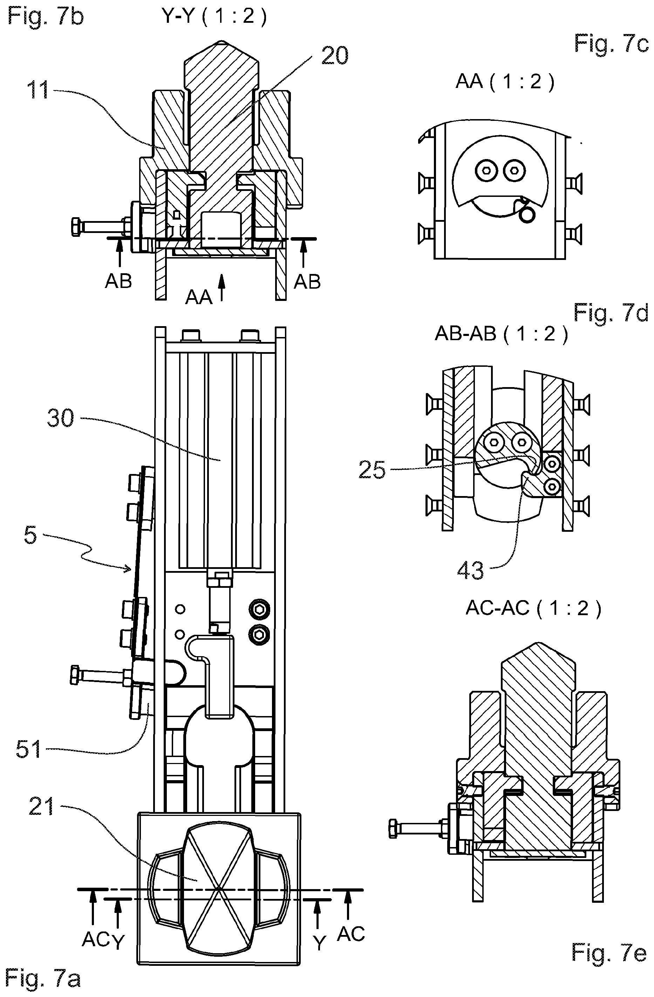

Bei der weiteren Bewegung, nämlich Einziehen der Kolbenstange 31 in den Pneumatikzylinder 30 wird gemäß Fig. 7a im Vergleich zu Fig. 6a mit dem Auslösevorsprung 33 an der Antriebsklaue 32 über das Verdrängungsbauteil 53 der Sperreinrichtung 5 die Sperre 51 gegen die Kraft der Blattfeder 52 nach außen (in Zeichenebene der Fig. 6a, 7a nach links) gedrängt, womit der Bewegungsraum für den Keilschlitten 4 im langgestreckten Antriebskasten 10 freigegeben ist und der Keilschlitten 4 ein Zurückschnellen der von der Blattfeder 52 belasteten Sperre 51 unterbindet. Dabei wird der Verriegelungsbolzen 2 vollständig in axialer Richtung angehoben, sodass die Vorsprünge des Verriegelungskopfes 21 oberhalb des Führungsbauteils 11 liegen (Fig. 7b und 7e) und nunmehr die Rückdrehung des Verriegelungskopfes 21 erfolgen kann. Dazu steht in Fig. 7d ein Mitnahmevorsprung 43 am Keilschlitten 4 in Kontakt mit einem Gegenlager 25 am Schaft 20 des Verriegelungsbolzens 2.

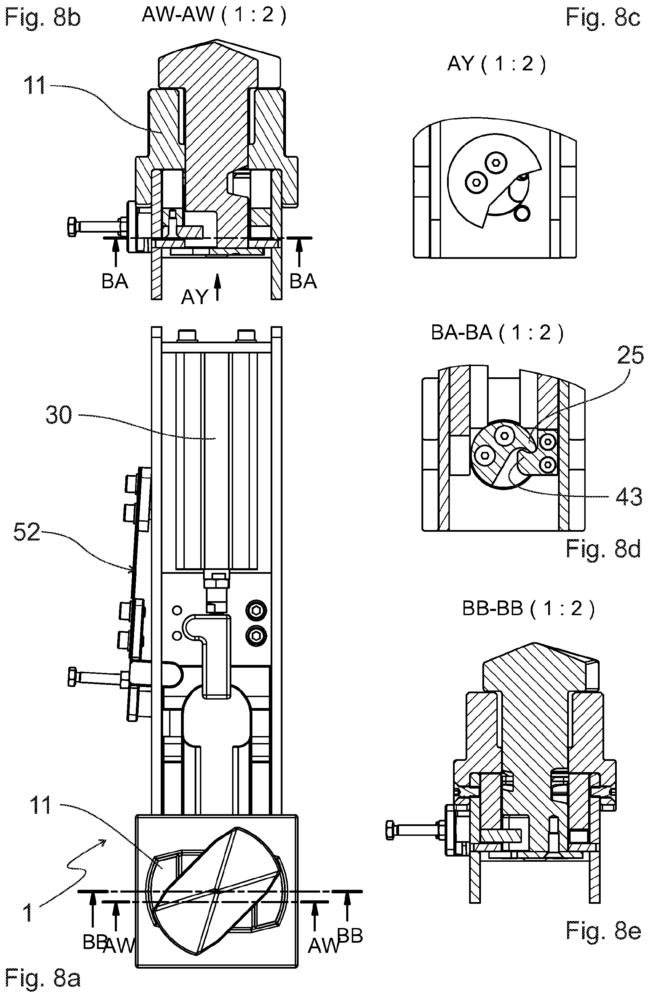

Bei weiterem Rückstellvorgang des Pneumatikzylinders 30, also fast vollständigem Einziehen der Kolbenstange 31 dreht sich somit bei weiterer lateraler Verschiebung des Keilschlittens 4 mit der Lateralbewegung des Mitnahmevorsprungs 43 der drehbar gelagerte Verriegelungsbolzen 2 aufgrund der mitnehmenden Anlage mit dem Gegenlager 25 am Schaft 20, wie aus Fig. 8d und 8a in der Aufsicht sowie Fig. 8b und 8e im Querschnitt ersichtlich ist. Entsprechend dreht sich der Verriegelungsbolzen 2 (siehe Fig. 2d) so in seinen entriegelten Zustand zurück, dass der Verriegelungskopf 21 fluchtend über dem Führungsbauteil 11 liegt, wie dies in Fig. 2a in der Aufsicht dargestellt ist (entriegelter Zustand, vergleiche Fig. 2a bis e).

Ferner ist an der Containerverriegelungsvorrichtung eine Notentriegelung 6 (siehe Fig. 5a) angeordnet, die ein erstes Schubelement 61 an der Sperreinrichtung 5 aufweist, wobei das erste Schubelement 61 eine Schraube ist, die in einer ersten Gewindebohrung 54 (siehe Fig. 5b) der Sperreinrichtung 5 angeordnet ist, sodass bei Einschrauben des ersten Schubelements 61 in diese erste Gewindebohrung 54 die Sperre 51 gegen die Kraft der Blattfeder 52 aus dem lateralen Bewegungsweg des Keilschlittens 4 herausbewegt wird. Nun kann mit einem zweiten, hier nicht dargestellten Schubelement, welches in eine Gewindebohrung an der äußeren Stirnseite des langgestreckten Antriebskasten 10 (hier nicht dargestellt) einschraubbar ist, der Keilschlitten 4, bspw. bei Ausfall der Druckluftversorgung oder Beschädigung des Pneumatikzylinders, manuell in seinen entriegelten Zustand gemäß Fig. 2a bis e rückgestellt werden.

### Bezugszeichenliste

- 1: Verriegelungsgehäuse
- 10: langgestreckter Antriebskasten
- 11: Führungsbauteil
- 12: Lastauflagefläche

- 2: Verriegelungsbolzen
- 20: Schaft
- 21: Verriegelungskopf
- 23: Aussparung
- 24: Anlagekante
- 25: Gegenlager

- 3: Antrieb
- 30: doppelt wirkender Pneumatikzylinder
- 31: Kolbenstange
- 32: Antriebsklaue
- 33: Auslösevorsprung

- 4: Keilschlitten
- 41: Auflaufschräge
- 42: Schubvorsprung
- 43: Mitnahmevorsprung

- 5: Sperreinrichtung
- 51: Sperre
- 52: Blattfeder
- 53: Verdrängungsbauteil
- 54: erste Gewindebohrung

- 6: Notentriegelung
- 61: erstes Schubelement

- Z: Achse

## Patentansprüche

1. Containerverriegelungsvorrichtung auf einem Fahrzeug, zur Verriegelung eines auf einer Ladefläche des Fahrzeugs zu transportierenden Containers mit einem Eckbeschlag, aufweisend ein Verriegelungsgehäuse (1), einen Verriegelungsbolzen (2) und einen Antrieb (3), wobei
- der Verriegelungsbolzen (2) einen Schaft (20) und einen Verriegelungskopf (21) hat, der in entriegeltem Zustand über eine Öffnung des Eckbeschlags des Containers einführbar und in verriegeltem Zustand den Container über die Öffnung des Eckbeschlages hintergreifende Vorsprünge sichert,
- der Verriegelungsbolzen (2) mit seinem Schaft (20) in dem Verriegelungsgehäuse (1) sowohl axial verschiebbar als auch um seine Achse drehbar gelagert ist,
- der Verriegelungsbolzen (2) an seinem Schaft (20) mit einer zu seinem Umfang tangentialen, ansteigenden Aussparung (23) versehen ist,
- ein Keilschlitten (4) im Verriegelungsgehäuse (1) lateral, also senkrecht zur Achse des Verriegelungsbolzens (2), hin- und herbewegbar gelagert und von dem Antrieb (3) antreibbar ist, und
- der Keilschlitten (4) eine Auflaufschräge (41) aufweist, die mit der Aussparung (23) des Verriegelungsbolzens (2) während der Lateralbewegung des Keilschlittens (4) in Eingriff steht und dem Verriegelungsbolzen (2) eine axiale Bewegung erteilt,
**dadurch gekennzeichnet, dass**
- der Verriegelungsbolzen (2) eine Anlagekante (24) an seinem Schaft (20) aufweist, die mit einem Schubvorsprung (42) des Keilschlittens (4) zusammenwirkt, um dem Verriegelungsbolzen (2) bei der Lateralbewegung des Keilschlittens (4) eine Drehbewegung um 90° zu erteilen,
- eine Sperreinrichtung am Verriegelungsgehäuse (1) angeordnet ist, die eine mit Federkraft beaufschlagte Sperre (51) aufweist, die in den lateralen Bewegungsweg des Keilschlittens (4) eingreifbar ausgebildet ist,
- der Antrieb (3) einen doppelt wirkenden Pneumatikzylinder (30) mit einer lateral bewegbaren Kolbenstange (31) aufweist, wobei die Kolbenstange (31) mit dem Keilschlitten (4) so wirkverbunden ist, dass beim ersten Teil der Hubbewegung des Antriebes (3) ein Leerhub und beim zweiten Teil der Hubbewegung die Lateralbewegung des Keilschlittens (4) erfolgen, und
- die Sperreinrichtung (5) einen Lösemechanismus für die Sperre (51) aufweist, der beim Leerhub die Sperre (51) löst.

2. Containerverriegelungsvorrichtung nach Anspruch 1, **dadurch gekennzeichnet, dass** eine Notentriegelung (6) vorgesehen ist, mit der die formschlüssige Sperre (51) der Sperreinrichtung (5) entriegelbar ist.

3. Containerverriegelungsvorrichtung nach Anspruch 2, **dadurch gekennzeichnet, dass** die Notentriegelung (6) zwei mit Außengewinde ausgestattete Schubelemente (61) aufweist, bei dem das erste Schubelement (61) in eine erste Gewindebohrung (54) in der Sperreinrichtung (5) und das zweite Schubelement in eine zweite Gewindebohrung im Verriegelungsgehäuse (1) einschraubbar ist, wobei das erste Schubelement (61) die Sperre freigibt und das zweite Schubelement den Keilschlitten (4) zur Öffnung der Verriegelung verschiebt.

4. Containerverriegelungsverfahren für eine
Containerverriegelungsvorrichtung auf einem Fahrzeug, zur Verriegelung eines auf einer Ladefläche des Fahrzeugs zu transportierenden Containers mit einem Eckbeschlag, aufweisend ein Verriegelungsgehäuse (1), einen Verriegelungsbolzen (2) und einen Antrieb (3), wobei
- der Verriegelungsbolzen (2) einen Schaft (20) und einen Verriegelungskopf (21) hat, der in entriegeltem Zustand über eine Öffnung des Eckbeschlags des Containers eingeführt werden kann und in verriegeltem Zustand den Container über die Öffnung des Eckbeschlages hintergreifende Vorsprünge sichert,
- der Verriegelungsbolzen (2) mit seinem Schaft (20) in dem Verriegelungsgehäuse (1) sowohl axial verschoben als auch um seine Achse gedreht wird,
- ein Keilschlitten (4) im Verriegelungsgehäuse (1) von dem Antrieb (3) lateral, also senkrecht zur Achse des Verriegelungsbolzens (2), hin- und herbewegt werden kann, und
- bei der Lateralbewegung des Keilschlittens (4) durch den Antrieb (3) der Keilschlitten (4) den Verriegelungsbolzen (2) beim Verstellen vom entriegelten Zustand in den verriegelten Zustand zunächst um 90° axial dreht und dann axial nach unten in Richtung auf die Ladefläche zu absenkt,
**dadurch gekennzeichnet, dass** bei Erreichen des verriegelten Zustands eine mit Federkraft beaufschlagte Sperre (51) in den lateralen Bewegungsweg des Keilschlittens (4) eingreift und eine Rückstellung des Keilschlittens (4) verhindert wird, und dass bei einem ersten Teil der Hubbewegung des Antriebes (3) ein Leerhub ausgeführt und bei einem zweiten Teil der Hubbewegung der Keilschlitten (4) mitbewegt wird, wobei beim Entriegeln eines Containers vom verriegelten Zustand in den entriegelten Zustand während des ersten Teils der Hubbewegung im Leerhub die Sperre (51) gelöst wird und dann während des zweiten Teils der Hubbewegung der Keilschlitten (4) rückbewegt wird, womit der Verriegelungsbolzen (2) zunächst angehoben und dann in den entriegelten Zustand rückgedreht wird.

5. Containerverriegelungsverfahren nach Anspruch 4, **dadurch gekennzeichnet, dass** bei Ausfall des Antriebs (3) mittels einer Notentriegelung (6) die Sperre (51) mechanisch gelöst wird und der Verriegelungsbolzen (2) in den entriegelten Zustand mechanisch zurückgestellt wird.

## Claims

1. Container locking device on a vehicle, for locking a container with a corner fitting to be transported on a loading surface of the vehicle, having a locking housing (1), a locking bolt (2) and a drive (3), wherein
- the locking bolt (2) has a shaft (20) and a locking head (21), which in the unlocked state can be inserted via an opening in the corner fitting of the container and in the locked state secures the container via projections engaging behind the opening in the corner fitting,
- the locking bolt (2) is mounted with its shaft (20) in the locking housing (1) so that it can be moved both axially and rotatably about its axis,
- the locking bolt (2) is provided on its shaft (20) with a recess (23) that is inclined tangential to its circumference,
- a wedge slide (4) is mounted in the locking housing (1) laterally, i.e. perpendicular to the axis of the locking bolt (2), so that it can be moved back and forth and can be driven by the drive (3), and
- the wedge slide (4) has an inclined support (41) which engages with the recess (23) of the locking bolt (2) during the lateral movement of the wedge slide (4) and gives the locking bolt (2) an axial movement,
**characterized in that**
- the locking bolt (2) has a contact edge (24) on its shaft (20), which cooperates with a pushing protrusion (42) of the wedge slide (4) to give the locking bolt (2) a 90° rotational movement during the lateral movement of the wedge slide (4),
- a locking device is arranged on the locking housing (1), which has a spring-loaded lock (51) which is designed to intrude in the lateral movement path of the wedge slide (4),
- the drive (3) has a double-acting pneumatic cylinder (30) with a laterally movable piston rod (31), the piston rod (31) being operatively connected to the wedge slide (4) in such a way that during the first part of the stroke movement of the drive (3) an idle stroke takes place and in the second part of the stroke movement the lateral movement of the wedge slide (4) takes place, and
- the locking device (5) has a release mechanism for the lock (51), which releases the lock (51) during the idle stroke.

2. Container locking device according to claim 1, **characterized in that** an emergency release (6) is provided with which the form-fitting lock (51) of the locking device (5) can be unlocked.

3. Container locking device according to claim 2, **characterized in that** the emergency release (6) has two push elements (61) equipped with external threads, in which the first push element (61) can be screwed into a first threaded hole (54) in the locking device (5) and the second push element can be screwed into a second threaded hole in the locking housing (1), the first push element (61) releasing the lock and the second push element displacing the wedge slide (4) to open the lock.

4. Container locking method for a container locking device on a vehicle, for locking a container with a corner fitting to be transported on a loading surface of the vehicle, comprising a locking housing (1), a locking bolt (2) and a drive (3), wherein
- the locking bolt (2) has a shaft (20) and a locking head (21), which in the unlocked state can be inserted via an opening in the corner fitting of the container and, in the locked state, secures the container via projections that engage behind the opening of the corner fitting,
- the locking bolt (2) with its shaft (20) is both axially displaced in the locking housing (1) and rotatable about its axis,
- a wedge slide (4) in the locking housing (1) can be moved back and forth laterally by the drive (3), i.e. perpendicular to the axis of the locking bolt (2), and
- during the lateral movement of the wedge slide (4) by the drive (3) of the wedge slide (4), the locking bolt (2) first rotates axially by 90° when adjusting from the unlocked state to the locked state and then axially downwards to be lowered towards the loading surface,
**characterized in that** when the locked state is reached, a spring-loaded lock (51) intrudes in the lateral movement path of the wedge slide (4) and prevents the wedge slide (4) from being reset, and that during a first part of the stroke movement of the drive (3) an idle stroke is carried out and during a second part of the stroke movement the wedge slide (4) is moved, whereby when unlocking a container from the locked state to the unlocked state, the lock (51) is released during the first part of the stroke movement in the idle stroke and then during the second part of the stroke movement the wedge slide (4) is moved back, whereby the locking bolt (2) is initially raised and then turned back to the unlocked state.

5. Container locking method according to claim 4, **characterized in that** if the drive (3) fails, the lock (51) is released mechanically by means of an emergency release (6) and the locking bolt (2) is mechanically reset to the unlocked state.

## Revendications

1. Dispositif de verrouillage de conteneur sur un véhicule, destiné au verrouillage d'un conteneur à transporter sur une surface de chargement du véhicule et muni d'une pièce de coin, comprenant un boîtier de verrouillage (1), un boulon de verrouillage (2) et un entraînement (3),
- le boulon de verrouillage (2) ayant une tige (20) et une tête de verrouillage (21), laquelle peut être insérée, à l'état déverrouillé, à travers une ouverture de la pièce de coin du conteneur et, à l'état verrouillé, bloque le conteneur au moyen de saillies s'engageant derrière l'ouverture de la pièce de coin,
- le boulon de verrouillage (2) étant logé avec sa tige (20) dans le boîtier de verrouillage (1) de manière à pouvoir aussi bien être déplacé axialement que tourné autour de son axe,
- le boulon de verrouillage (2) étant pourvu, sur sa tige (20), d'un évidement tangentiel à sa circonférence et ascendant,
- une glissière en coin (4) étant logée dans le boîtier de verrouillage (1) de manière à pouvoir effectuer un mouvement de va-et-vient latéralement, c'est-à-dire perpendiculairement à l'axe du boulon de verrouillage (2), et pouvant être entraînée par l'entraînement (3), et
- la glissière en coin (4) présentant une rampe d'attaque (41) qui est en prise avec l'évidement (23) du boulon de verrouillage (2) lors du mouvement latéral de la glissière en coin (4) et confère au boulon de verrouillage (2) un mouvement axial,
**caractérisé en ce que**
- le boulon de verrouillage (2) présente, sur sa tige (20), une arête d'appui (24) qui coopère avec une saillie de poussée (42) de la glissière en coin (4) afin de conférer au boulon de verrouillage (2), lors du mouvement latéral de la glissière en coin (4), un mouvement de rotation de 90°,
- un dispositif de blocage est disposé sur le boîtier de verrouillage (1) et comprend un organe de blocage (51) soumis à une force de ressort et conçu pour pouvoir s'engager dans la trajectoire de déplacement latéral de la glissière en coin (4),
- l'entraînement (3) comprend un vérin pneumatique à double effet (30) avec une tige de piston (31) mobile latéralement, la tige de piston (31) étant reliée fonctionnellement à la glissière en coin (4) de telle sorte que, lors de la première partie du mouvement de levage de l'entraînement (3), une course à vide est effectuée, et que, lors de la seconde partie du mouvement de levage, le mouvement latéral de la glissière en coin (4) est effectué, et
- le dispositif de blocage (5) est muni d'un mécanisme de libération de l'organe de blocage (51), lequel libère l'organe de blocage (51) lors de la course à vide.

2. Dispositif de verrouillage de conteneur selon la revendication 1, **caractérisé en ce qu'**un déverrouillage d'urgence (6) est prévu, au moyen duquel l'organe de blocage (51) à complémentarité de forme du dispositif de blocage (5) peut être déverrouillé.

3. Dispositif de verrouillage de conteneur selon la revendication 2, **caractérisé en ce que** le déverrouillage d'urgence (6) comporte deux éléments de poussée (61) munis d'un filetage extérieur, le premier élément de poussée (61) pouvant être vissé dans un premier alésage taraudé (54) dans le dispositif de blocage (5), et le second élément de poussée pouvant être vissé dans un second alésage taraudé dans le boîtier de verrouillage (1), le premier élément de poussée (61) libérant l'organe de blocage et le second élément de poussée déplaçant la glissière en coin (4) pour ouvrir le verrouillage.

4. Procédé de verrouillage de conteneur pour un dispositif de verrouillage de conteneur sur un véhicule, en vue de verrouiller un conteneur à transporter sur une surface de chargement du véhicule et muni d'une pièce de coin, comprenant un boîtier de verrouillage (1), un boulon de verrouillage (2) et un entraînement (3), procédé dans lequel
- le boulon de verrouillage (2) a une tige (20) et une tête de verrouillage (21), laquelle peut être insérée, à l'état déverrouillé, à travers une ouverture de la pièce de coin du conteneur et, à l'état verrouillé, bloque le conteneur au moyen de saillies s'engageant derrière l'ouverture de la pièce de coin,
- le boulon de verrouillage (2) avec sa tige (20) dans le boîtier de verrouillage (1) est aussi bien déplacé axialement que tourné autour de son axe,
- une glissière en coin (4) peut être déplacée dans le boîtier de verrouillage (1) par l'entraînement (3) selon un mouvement de va-et-vient latéralement, c'est-à-dire perpendiculairement à l'axe du boulon de verrouillage (2), et
- lors du mouvement latéral de la glissière en coin (4) par l'entraînement (3), la glissière en coin (4) fait d'abord tourner axialement le boulon de verrouillage (2) de 90° lors du passage de l'état déverrouillé à l'état verrouillé, puis l'abaisse axialement vers le bas en direction de la surface de chargement,
**caractérisé en ce que,** lorsque l'état verrouillé est atteint, un organe de blocage (51) soumis à une force de ressort s'engage dans la trajectoire de déplacement latéral de la glissière en coin (4) et empêche un retour de la glissière en coin (4), et **en ce que**, lors d'une première partie de la course de levage de l'entraînement (3), une course à vide est effectuée et, lors d'une seconde partie du mouvement de levage, la glissière en coin (4) est entraînée, l'organe de blocage (51) étant libéré lors du déverrouillage d'un conteneur de l'état verrouillé à l'état déverrouillé, durant la première partie du mouvement de levage dans la course à vide, puis la glissière en coin (4) étant ramenée en arrière durant la seconde partie du mouvement de levage, ce qui tout d'abord soulève le boulon de verrouillage (2) puis le ramène par rotation dans l'état déverrouillé.

5. Procédé de verrouillage de conteneur selon la revendication 4, **caractérisé en ce qu'**en cas de défaillance de l'entraînement (3), l'organe de blocage (51) est libéré mécaniquement au moyen d'un déverrouillage d'urgence (6) et le boulon de verrouillage (2) est ramené mécaniquement dans l'état déverrouillé.
